# EUROPEAN PATENT APPLICATION

(11) **EP 4 177 305 A1**
(43) Date of publication of application: **10.05.2023**
(21) Application number: 21875546.0
(22) Date of filing: 27.09.2021
(51) Int. Cl.: C08K 5/5313, C08L 9/00, C08L 23/00, C08K 3/22

(54) **FLAME-RETARDANT RUBBER COMPOSITION, AND OUTER HOOD FOR RAIL VEHICLE**

(30) Priority: 30.09.2020 JP 2020165447
(71) Applicant: Sumitomo Riko Company Limited, Komaki-shi, Aichi 485-8550 (JP)
(72) Inventor: MURATANI Keiichi, Komaki-shi, Aichi 485-8550 (JP)
(74) Representative: Müller-Boré & Partner Patentanwälte PartG mbB
(86) International application number: PCT/JP2021/035442
(87) International publication number: WO 2022/071244

(57) **Abstract**

Provided are: a flame-retardant rubber composition containing the following components (A)-(E); and an outer hood for a rail vehicle, the outer hood composed of a cross-linked body of the flame-retardant rubber composition. Accordingly, the present invention ensures excellent rubber properties such as tensile strength and elongation at break, and exhibits good flame-retardancy. (A) At least one which is not (B) below and is selected from the group consisting of diene-based rubber, olefin-based rubber, urethane rubber, and silicone rubber. (B) Acid-modified polyolefin. (C) Metal hydroxide. (D) Phosphinic acid metal salt. (E) Cross-linking agent of component (A).

## Description

### [Technical Field]

The present invention relates to a flame-retardant rubber composition used for outer diaphragms of rail vehicles and the like, and an outer diaphragm for rail vehicles formed using the flame-retardant rubber composition.

### [Background Art]

An outer diaphragm is disposed between cars (at a car-coupling part) of a rail vehicle for the main purpose of preventing people from falling from a platform to a space created between the cars of a train, reducing the air resistance of coupling parts between the cars, and the like. For such an outer diaphragm for rail vehicles, a white or gray rubber outer diaphragm composed of an ethylene-propylene-diene rubber (EPDM) or the like is used, for example (refer to Patent Literature 1, for example).

Meanwhile, an outer diaphragm for rail vehicles has been conventionally required to have flame-retardancy, and strict flame-retardancy tends to be required particularly overseas. Regarding making rubber flame-retardant, there is generally an approach of adding flame-retardants such as halogen-based flame-retardants, phosphorus-based flame-retardants, and hydroxides to rubber (refer to Patent Literature 2 to Patent Literature 4, for example).

### [Citation List]

### [Patent Literature]

[Patent Literature 1]
   Japanese Patent No. 4853485
[Patent Literature 2]
   Japanese Patent Laid-Open No. H7-166047
[Patent Literature 3]
   Japanese Patent Laid-Open No. 2005-146256
[Patent Literature 4]
   Japanese Patent Laid-Open No. 2009-227695

### SUMMARY OF INVENTION

### [Technical Problem]

However, the halogen-based flame-retardants have a problem of generating black smoke when burned and a problem of adverse effects on the environment.

On the other hand, the phosphorus-based flame-retardants and the hydroxides do not have problems similar to those of the halogen-based flame-retardants, but are required to be added to rubber in large amounts to exhibit their flame-retardancy effect, which is likely to cause deterioration in rubber properties. In addition, because the phosphorus-based flame-retardants and the hydroxides have a low interaction with rubber and have a particle size larger than that of reinforcing materials such as silica and carbon black, there is a concern that it is likely to be the starting point of rubber destruction and cause deterioration in rubber properties such as tensile strength and elongation at break.

The present invention has been made in view of such circumstances, and provides a flame-retardant rubber composition having excellent rubber properties such as tensile strength and elongation at break and also having excellent flame-retardancy, and an outer diaphragm for a rail vehicle formed using the flame-retardant rubber composition.

### [Solution to Problem]

The inventor of the present conducted extensive research to achieve the above-mentioned objective. In the process of the research, using metal hydroxides and the like as a flame-retardant was examined from the viewpoint of preventing the generation of black smoke when burned. However, because the metal hydroxides and the like have low dispersibility in rubbers such as a diene-based rubber and an olefin-based rubber, and there is a problem that the flame-retardancy effect is unlikely to be exhibited unless large amounts thereof are added to the rubber as mentioned above. In this regard, the inventor of the present invention examined ways to improve the dispersibility of the metal hydroxides and the like by adding an acid-modified polyolefin to the above-mentioned rubber together with the metal hydroxides and the like. In the above-mentioned acid-modified polyolefin, an acid-modified group thereof has high bondability with the metal hydroxides and the like, and the acid-modified polyolefin obtained as a result to which the metal hydroxides and the like are bonded shows favorable dispersibility with respect to the above-mentioned rubber.

Furthermore, the inventor of the present invention also examined use of a phosphinic acid metal salt together with the metal hydroxide as the flame-retardant. With a general phosphorus-based flame-retardant, the action of preventing further burning and spreading when rubber burns is exhibited by formation of mainly a carbonized layer (solid phase), whereas with the phosphinic acid metal salt, not only the flame-retardancy effect by the formation of a carbonized layer as described above, but also the effect of preventing the expansion of burning caused by a rubber decomposition gas (gas phase) generated due to heating of the rubber (a radical-trapping effect of capturing radicals generated by thermal decomposition of rubber) is obtained, thereby making the flame-retardancy effect particularly at the initial stage of burning excellent.

In addition, it was found that the intended objective can be achieved by combining each of the above-mentioned flame-retardants, which enables minimization of the addition amount of the flame-retardant and also a higher flame-retardancy effect for both the gas phase and the solid phase to be realized, and furthermore, by using the above-mentioned acid-modified polyolefin by which excellent flexibility is shown and tensile strength, elongation at break, tensile stress, and the like required for an outer diaphragm for rail vehicles are also shown.

That is, the present invention has the following [1] to [12] as its gist to achieve the above-mentioned objective.
[1] A flame-retardant rubber composition containing the following components (A) to (E):
   (A) excluding (B) below, at least one selected from the group consisting of a diene-based rubber, an olefin-based rubber, a urethane rubber, and a silicone rubber;
   (B) an acid-modified polyolefin;
   (C) a metal hydroxide;
   (D) a phosphinic acid metal salt; and
   (E) a cross-linking agent of the component (A).
[2] The flame-retardant rubber composition according to [1], further containing the following component (F):
   (F) a phenol-based antioxidant.
[3] The flame-retardant rubber composition according to [1] or [2], in which a content ratio of the component (C) is in a range of 50 to 300 parts by weight with respect to 100 parts by weight as a total content of the component (A) and the component (B).
[4] The flame-retardant rubber composition according to any one of [1] to [3], in which a content ratio of the component (D) is in a range of 5 to 50 parts by weight with respect to 100 parts by weight as a total content of the component (A) and the component (B).
[5] The flame-retardant rubber composition according to any one of [2] to [4], in which a content ratio of the component (F) is in a range of 0.5 to 5 parts by weight with respect to 100 parts by weight as a total content of the component (A) and the component (B).
[6] The flame-retardant rubber composition according to any one of [1] to [5], in which an average particle size of the phosphinic acid metal salt (D) is in a range of 1 to 40 µm.
[7] The flame-retardant rubber composition according to any one of [1] to [6], in which the component (A) is at least one selected from the group consisting of a natural rubber, a butadiene rubber, a styrene butadiene rubber, an ethylene-propylene-diene rubber, an ethylene-butene-diene rubber, chlorosulfonated polyethylene, a urethane rubber, and a silicone rubber.
[8] The flame-retardant rubber composition according to any one of [1] to [7], in which a content ratio of the component (A) and the component (B) is in a range of A/B = 95/5 to 70/30 in terms of weight ratio.
[9] The flame-retardant rubber composition according to any one of [1] to [8], in which the acid-modified polyolefin (B) is a maleic acid anhydride-modified polyolefin.
[10] The flame-retardant rubber composition according to any one of [1] to [9], in which the metal hydroxide (C) is at least one selected from aluminum hydroxide and magnesium hydroxide.
[11] The flame-retardant rubber composition according to any one of [1] to [10], which is a flame-retardant rubber composition for diaphragms.
[12] An outer diaphragm for rail vehicles, the outer diaphragm containing a cross-linked body of the flame-retardant rubber composition according to any one of [1] to [10].

### [Advantageous Effects of Invention]

As described above, the flame-retardant rubber composition of the present invention contains (A) a rubber such as a diene-based rubber or olefin-based rubber, (B) an acid-modified polyolefin, (C) a metal hydroxide, (D) a phosphinic acid metal salt, and (E) a cross-linking agent. Therefore, the flame-retardant rubber composition of the present invention exerts an excellent effect on rubber properties such as tensile strength, elongation at break, and tensile stress, and also exerts an excellent flame-retardancy effect. This enables excellent performance as a forming material for diaphragms such as outer diaphragm for rail vehicles to be exhibited in particular.

Therefore, the outer diaphragm for rail vehicles composed of the cross-linked body of the flame-retardant rubber composition of the present invention has excellent rubber properties such as tensile strength, elongation at break, and tensile stress, and also has excellent flame-retardancy.

### DESCRIPTION OF EMBODIMENTS

Next, embodiments of the present invention will be described in detail.

As described above, a flame-retardant rubber composition of the present invention contains (A) at least one rubber selected from the group consisting of a diene-based rubber, an olefin-based rubber, a urethane rubber, and a silicone rubber, (B) an acid-modified polyolefin, (C) a metal hydroxide, (D) a phosphinic acid metal salt, and (E) a cross-linking agent. Therefore, the flame-retardant rubber composition of the present invention exerts an excellent flame-retardancy effect as well as an excellent effect on rubber properties such as tensile strength, elongation at break, and tensile stress, and can exhibit excellent performance particularly as a forming material for diaphragms such as an outer diaphragm for rail vehicles.

In the present invention, the above-mentioned "olefin-based rubber" means a polymer, which has an olefin, and a cross-linkable rubber. Examples of cross-linkable functional groups of the olefin-based rubber include an active methylene group, a methine group, and a methyl group which are adjacent to olefinic double bonds.

Furthermore, in the present invention, the above-mentioned specific rubber (A) does not contain the above-mentioned acid-modified polyolefin (B).

### <<Diene-based rubber (component A)>>

Examples of the above-mentioned diene-based rubber include a natural rubber (NR), a styrene-butadiene rubber (SBR), an acrylonitrile-butadiene rubber (NBR), an isoprene rubber (IR), and a butadiene rubber (BR). These may be used alone or in combination of two or more thereof. Among these, a natural rubber (NR) and a styrene-butadiene rubber (SBR) are preferably used from the viewpoint of better durability, wear resistance, and the like.

### «Olefin-based rubber (component A)»

Examples of the above-mentioned olefin-based rubber include an ethylene-propylene-based rubber such as an ethylene-propylene-diene rubber (EPDM) and an ethylene-propylene copolymerized rubber (EPM), an ethylene-butene-diene rubber (EBT), chlorosulfonated polyethylene (CSM), a polyisobutylene rubber, a polyisobutyl ether rubber, a polycyclopentene rubber, and a butyl rubber. These may be used alone or in combination of two or more thereof. Among these, an ethylene-propylene-diene rubber (EPDM), an ethylene-butene-diene rubber (EBT), and chlorosulfonated polyethylene (CSM) are preferably used from the viewpoint that better durability and the like.

### <<Other rubbers (component A)>>

Examples of rubbers other than the above-mentioned diene-based rubber and olefin-based rubber include a urethane rubber and a silicone rubber. These may be used alone or in combination of two or more thereof.

In addition, in the present invention, at least one rubber selected from the group consisting of a diene-based rubber, an olefin-based rubber, a urethane rubber, and a silicone rubber is used as the component (A) as described above.

### <<Acid-modified polyolefin (component B)>>

Examples of the above-mentioned acid-modified polyolefin (B) include one obtained by acid-modifying polyolefin resins (excluding the olefin-based rubber (A)) such as poly-α-olefin, high-density polyethylene (HDPE), polyethylene, polypropylene, polybutene, and polymethylpentene. These acid-modified polyolefins may be used alone or in combination of two or more thereof. Examples of the above-mentioned acid modification includes acid modification by unsaturated carboxylic acid, polylactic acid, phosphoric acid, sulfonic acid, and the like. In addition, examples of the above-mentioned unsaturated carboxylic acid includes acrylic acid, methacrylic acid, maleic acid, maleic acid anhydride, itaconic acid, itaconic acid anhydride, fumaric acid, crotonic acid, half esters of unsaturated dicarboxylic acid, half amides of unsaturated dicarboxylic acid, phthalic acid, cinnamic acid, glutaconic acid, citraconic acid anhydride, aconitic acid anhydride, and nadic acid. Furthermore, a modified group by the above-mentioned acid modification may be at the terminal of a polyolefin molecular chain or in the middle of a molecular chain (non-terminal of the molecular chain).

Among them, the above-mentioned acid-modified polyolefin (B) is preferably a maleic acid anhydride-modified polyolefin from the viewpoint of dispersibility of the metal hydroxide (C), the phosphinic acid metal salt (D), and the like, and is more preferably maleic acid anhydride-modified poly-α-olefin from the same viewpoint.

In addition, the content ratio of the above-mentioned specific rubber (A) and the above-mentioned acid-modified polyolefin (B) is preferably in the range of A/B = 95/5 to 70/30 in terms of weight ratio, and is more preferably in the range of A/B = 95/5 to 80/20. That is, with such a content ratio, favorable rubber properties and durability can be obtained as well as favorable dispersibility of the metal hydroxide (C), the phosphinic acid metal salt (D), and the like.

### «Metal hydroxide (component C)»

As the above-mentioned metal hydroxide (C), aluminum hydroxide, magnesium hydroxide, calcium hydroxide, sodium hydroxide, tin hydroxide, and the like may be used alone or in combination of two or more thereof, for example. Among them, aluminum hydroxide and magnesium hydroxide are preferably used from the viewpoint of excellent flame-retardancy and smoke generation preventing property.

The average particle size of the above-mentioned metal hydroxide (C) is usually in the range of 0.5 to 2 µm. Furthermore, when the average particle size of the above-mentioned metal hydroxide (C) is small (average particle size of 1.0 µm or less), this also has an advantage that there is no risk of causing deterioration in rubber properties due to the average particle size thereof. The above-mentioned average particle size is a volume average particle size, and can be derived by measurement using a laser diffraction and scattering-type particle size distribution analyzer using a sample arbitrarily extracted from a parent population, for example. Furthermore, the average particle size of the metal hydroxide (C) used in Examples to be described later is also measured in this manner.

The content ratio of the above-mentioned metal hydroxide (C) is in the range of preferably 50 to 300 parts by weight, more preferably 50 to 200 parts by weight, and further preferably 80 to 150 parts by weight with respect to 100 parts by weight as the total content of the above-mentioned specific rubber (A) and the acid-modified polyolefin (B). That is, when the metal hydroxide (C) is less than the above-mentioned range, it is difficult to obtain a desired flame-retardancy effect, and when the metal hydroxide (C) is more than the above-mentioned range, the workability may deteriorate, or the mechanical strength may deteriorate.

### <<Phosphinic acid metal salt (component D)>>

Examples of the above-mentioned phosphinic acid metal salt (D) include phosphinic acid aluminum salts, phosphinic acid calcium salts, and phosphinic acid zinc salts. Specific examples of the above-mentioned phosphinic acid aluminum salts include aluminum diethylphosphinate. In addition, these may be used alone or in combination of two or more thereof. Among these, phosphinic acid aluminum acid salts are preferable, and among them, aluminum diethylphosphinate is more preferable.

Furthermore, the average particle size of the above-mentioned phosphinic acid metal salt (D) is preferably in the range of 1 to 40 µm, more preferably in the range of 1 to 20 µm, and further preferably in the range of 1 to 10 µm from the viewpoint of obtaining a desired flame-retardancy effect and preventing the inhibition of the strongness of pulling of the rubber.

The above-mentioned average particle size is also a volume average particle size, and can also be derived by measurement using a laser diffraction and scattering-type particle size distribution analyzer using a sample arbitrarily extracted from a parent population, for example. Furthermore, the average particle size of the phosphinic acid metal salt (D) used in Examples to be described later is also measured by the same approach.

The content ratio of the above-mentioned phosphinic acid metal salt (D) is in the range of preferably 5 to 50 parts by weight, more preferably 5 to 40 parts by weight, and further preferably 10 to 25 parts by weight with respect to 100 parts by weight as the total content of the above-mentioned specific rubber (A) and the acid-modified polyolefin (B). That is, when the phosphinic acid metal salt (D) is less than the above-mentioned range, it is difficult to obtain a desired flame-retardancy effect, and when the phosphinic acid metal salt (D) is more than the above-mentioned range, the workability may deteriorate, or the mechanical strength may deteriorate.

### «Cross-linking agent (component E)»

As the above-mentioned cross-linking agent (E), one adapted for cross-linking the rubber is used according to the type of the specific rubber (A) used.

In addition, examples of the above-mentioned cross-linking agent (E) include sulfur-based cross-linking agents such as sulfur and sulfur chloride, and organic peroxides such as 2,4-dichlorobenzoyl peroxide, benzoyl peroxide, 1,1-di-t-butylperoxy-3,3,5-trimethylcyclohexane, 2,5-dimethyl-2,5-dibenzoylperoxyhexane, n-butyl-4,4'-di-t-butylperoxyvalerate, dicumyl peroxide, t-butyl peroxybenzoate, di-t-butylperoxy-diisopropylbenzene, t-butyl cumyl peroxide, 2,5-dimethyl-2,5-di-t-butylperoxyhexane, di-t-butyl peroxide, 2,5-dimethyl-2,5-di-t-butylperoxyhexyne-3, and 1,3-bis-(t-butylperoxy-isopropyl)benzene. These may be used alone or in combination of two or more thereof. Among them, when the above-mentioned cross-linking agent (E) is composed only of an organic peroxide (but not containing sulfur), this is preferable because then the problem of yellowing due to acid rain can be solved, which makes it possible to exhibit excellent performance as a forming material for diaphragms such as an outer diaphragm for rail vehicles. Among the above-mentioned organic peroxides, dicumyl peroxide is more preferable.

The content of the above-mentioned cross-linking agent (E) is preferably in the range of 0.5 to 15 parts by weight, and more preferably in the range of 0.5 to 10 parts by weight with respect to 100 parts by weight as the total content of the above-mentioned specific rubber (A) and the acid-modified polyolefin (B). That is, when the content of the above-mentioned cross-linking agent (E) is too small, the tensile strength tends to decrease, and when the content of the above-mentioned cross-linking agent (E) is too large, the scorch resistance tends to deteriorate, and the elongation tends to become narrow.

### <<Phenol-based antioxidant (component F)>>

In the flame-retardant rubber composition of the present invention, it is preferable to incorporate a phenol-based antioxidant (F) in addition to the above-mentioned components (A) to (E) to further enhance the flame-retardancy effect. This is because, in other words, by a combination use with the above-mentioned phosphinic acid metal salt (D), the radical-trapping effect when burning rubber becomes higher, which makes the flame-retardancy effect (particularly the flame-retardancy effect at the initial stage of burning) better.

As the above-mentioned phenol-based antioxidant (F), antioxidants belonging to monophenols, bisphenols, and polyphenols may be used alone or in combination of two or more thereof, for example. Among them, a hindered phenol-based antioxidant is preferably used from the viewpoint of optimum reactivity and the like.

As the above-mentioned hindered, phenol-based antioxidant, N,N'-hexamethylenebis[3-(3,5-di-t-butyl-4-hydroxyphenyl)propanamide], 4,4'-thiobis(3-methyl-6-t-butylphenol), 4,4'-butylidenebis(2-t-butyl-5-methylphenol), 4,4',4"-[(2,4,6-trimethylbenzene-1,3,5-triyl)tris(methylene)]tris(2,6-di-t-butylphenol), and the like are used alone or in combination of two or more thereof.

In addition, the content ratio of the phenol-based antioxidant (F) is in the range of preferably 0.5 to 5 parts by weight, and more preferably 1 to 3 parts by weight with respect to 100 parts by weight as the total content of the above-mentioned specific rubber (A) and the acid-modified polyolefin (B). That is, a favorable flame-retardancy effect can be obtained by incorporating the phenol-based antioxidant (F) in the above-mentioned range.

In the flame-retardant rubber composition of the present invention, reinforcing materials, vulcanization accelerators, vulcanization auxiliary agents, co-cross-linking agents, anti-aging agents, process oils, or the like can be appropriately blended as necessary, in addition to the above-mentioned components (A) to (E), and the above-mentioned component (F) which is an optional component.

Examples of the above-mentioned reinforcing materials include carbon black, silica, and talc. These may be used alone or in combination of two or more thereof.

The content ratio of the above-mentioned reinforcing material is in the range of preferably 5 to 50 parts by weight, more preferably 10 to 40 parts by weight, and further preferably 15 to 30 parts by weight with respect to 100 parts by weight as the total content of the above-mentioned specific rubber (A) and the acid-modified polyolefin (B).

Examples of the above-mentioned vulcanization accelerators include thiazole-based, sulfenamide-based, thiuram-based, aldehyde ammonia-based, aldehyde amine-based, guanidine-based, and thiourea-based vulcanization accelerators. These may be used alone or in combination of two or more thereof.

The content ratio of the above-mentioned vulcanization accelerator is in the range of preferably 0.5 to 7 parts by weight, and more preferably 0.5 to 5 parts by weight with respect to 100 parts by weight as the total content of the above-mentioned specific rubber (A) and the acid-modified polyolefin (B).

Examples of the above-mentioned vulcanization auxiliary agents include zinc oxide (ZnO), stearic acid, and magnesium oxide. These may be used alone or in combination of two or more thereof.

The content ratio of the above-mentioned vulcanization auxiliary agent is in the range of preferably 1 to 25 parts by weight, and more preferably 3 to 10 parts by weight with respect to 100 parts by weight as the total content of the above-mentioned specific rubber (A) and the acid-modified polyolefin (B).

As the above-mentioned co-cross-linking agents, for example, divinylbenzene and triallyl isocyanurate (TAIC) are suitably used. Together with these, examples thereof include triallyl cyanurate, diacetone diacrylamide, polyethylene glycol diacrylate, polyethylene glycol dimethacrylate, trimethylolpropane trimethacrylate, trimethylolpropane triacrylate, ethylene glycol dimethacrylate, triethylene glycol dimethacrylate, diethylene glycol dimethacrylate, diisopropenylbenzene, p-quinone dioxime, p,p-dibenzoylquinone dioxime, phenylmaleimide, allyl methacrylate, N,N-m-phenylene bismaleimide, diallyl phthalate, tetraallyloxyethane, and 1,2-polybutadiene. These may be used alone or in combination of two or more thereof.

The content ratio of the above-mentioned co-cross-linking agent is in the range of preferably 0.1 to 10 parts by weight, and more preferably 3 to 10 parts by weight with respect to 100 parts by weight as the total content of the above-mentioned specific rubber (A) and the acid-modified polyolefin (B).

Examples of the above-mentioned anti-aging agents include carbamate-based anti-aging agents, phenylenediamine-based anti-aging agents, diphenylamine-based anti-aging agents, quinoline-based anti-aging agents, imidazole-based anti-aging agents, and waxes. These may be used alone or in combination of two or more thereof. The content ratio of the above-mentioned anti-aging agent is in the range of preferably 1 to 10 parts by weight, and more preferably 2 to 5 parts by weight with respect to 100 parts by weight as the total content of the above-mentioned specific rubber (A) and the acid-modified polyolefin (B).

Examples of the above-mentioned process oils include naphthene-based oils, paraffin-based oils, and aroma-based oils. These may be used alone or in combination of two or more thereof. The content ratio of the above-mentioned process oils is in the range of preferably 1 to 50 parts by weight, and more preferably 3 to 30 parts by weight with respect to 100 parts by weight as the total content of the above-mentioned specific rubber (A) and the acid-modified polyolefin (B).

The flame-retardant rubber composition of the present invention can be prepared as follows, for example. That is, the above-mentioned specific rubber (A), the acid-modified polyolefin (B), the metal hydroxide (C), and the phosphinic acid metal salt (D), and, as necessary, the phenol-based antioxidant (F), the reinforcing material, the anti-aging agent, the process oil, and the like are appropriately blended, and using a Banbury mixer or the like, kneading of them is started from the temperature of about 50°C to perform kneading at 100°C to 160°C for 3 to 5 minutes. Next, the cross-linking agent (E), the co-cross-linking agent, the vulcanization accelerator, the vulcanization auxiliary agent, and the like are appropriately blended therein, and using an open roll, kneading is performed under predetermined conditions (for example, 60°C × 5 minutes) to prepare the flame-retardant rubber composition. Thereafter, the obtained flame-retardant rubber composition is cross-linked at a high temperature (150°C to 170°C) for 5 to 60 minutes, and thereby a flame-retardant rubber (cross-linked body) can be obtained.

The flame-retardant rubber composition of the present invention can exhibit excellent performance as a forming material for diaphragms such as outer diaphragm for rail vehicles in particular. Examples of diaphragms other than the outer diaphragm for rail vehicles include diaphragms for automobiles. In addition, the outer diaphragm for rail vehicles composed of the cross-linked body of the flame-retardant rubber composition of the present invention has excellent rubber properties such as tensile strength, elongation at break, and tensile stress, and has excellent flame-retardancy. Examples

Next, examples will be described together with comparative examples. However, the present invention is not limited to these examples.

First, the materials shown below were prepared prior to examples and comparative examples.
[EPDM (component A)]
   Esprene 512F (manufactured by Sumitomo Chemical Co., Ltd.)
[CSM (component A)]
   TS-430 (manufactured by TOSOH CORPORATION)
[NR (component A)]
   Natural rubber
[Acid-modified polyolefin (component B)]
   TAFMER MH7020 (manufactured by Mitsui Chemicals, Inc.)
[Zinc oxide]
   Zinc Oxide Grade No.2 (manufactured by Sakai Chemical Industry Co., Ltd.)
[Stearic acid]
   Stearic acid Sakura (manufactured by NOF CORPORATION)
[Aluminum hydroxide (component C)]
   KH-101 (manufactured by KC CORPORATION), average particle size: 1.0 µm
[Magnesium hydroxide (component C)]
   KISUMA 5 (manufactured by Kyowa Chemical Industry Co., Ltd.), average particle size: 0.9 µm
[Phosphinic acid metal salt-1 (component D)]
   Aluminum diethylphosphinate, EXOLIT OP 1230 (manufactured by Clariant), average particle size: 40 µm
[Phosphinic acid metal salt-2 (component D)]
   Aluminum diethylphosphinate, EXOLIT OP 930 (manufactured by Clariant), average particle size: 20 µm
[Phosphinic acid metal salt-3 (component D)]
   Aluminum diethylphosphinate, EXOLIT OP 945 (manufactured by Clariant), average particle size: 5 µm
[Ammonium polyphosphate]
   FCP 790 (manufactured by Suzuhiro Chemical Co., Ltd.)
[Phenol-based antioxidant (component F)]
   Irganox 1010 (manufactured by BASF)
[Peroxide cross-linking agent (component E)]
   PERCUMYL D40 (manufactured by NOF CORPORATION)
[Co-cross-linking agent]
   Hi-Cross ED-P (manufactured by Seiko Chemical Co., Ltd.)
[Sulfur (component E)]
   Sulfur (manufactured by Karuizawa Seirenjo)
[Vulcanization accelerator-1]
   SANCELER BZ (manufactured by SANSHIN CHEMICAL INDUSTRY CO., LTD.)
[Vulcanization accelerator-2]
   SANCELER TT (manufactured by SANSHIN CHEMICAL INDUSTRY CO., LTD.)
[Vulcanization accelerator-3]
   SANCELER TRA (manufactured by SANSHIN CHEMICAL INDUSTRY CO., LTD.)
[Vulcanization accelerator-4]
   VULNOC R (manufactured by OUCHI SHINKO CHEMICAL INDUSTRIAL CO., LTD.)

### <Examples 1 to 17 and Comparative Examples 1 to 3>

Each component shown in Table 1 and Table 2 below was blended in the proportion shown in the same tables and kneaded by the above-mentioned approach using a Banbury mixer and an open roll to prepare a rubber composition (flame-retardant rubber composition).

Using the flame-retardant rubber compositions of the examples and the comparative examples thus obtained, evaluation of each property was performed according to the following criteria. The results are shown in Table 1 and Table 2 below.

### «Tensile stress, tensile strength, and elongation at break»

Each flame-retardant rubber composition was press-formed (vulcanized) under the condition of 150°C × 20 minutes to produce a rubber sheet having the thickness of 2 mm. Then, this rubber sheet was punched out with a JIS No. 5 dumbbell to measure tensile stress (M₁₀₀), strongness of pulling (tensile strength), and elongation when cutting (elongation at break) under a 25°C atmosphere in accordance with JIS K 6251 (2010).

In addition, the above-mentioned tensile stress (M₁₀₀) was evaluated as follows: "O (excellent)" for one having 4 MPa or more; "O (very good)" for one having 2.5 MPa or more and less than 4 MPa; "Δ (good)" for one having 2 MPa or more and less than 2.5 MPa; and "X (poor)" for one having less than 2 MPa.

In addition, the above-mentioned tensile strength was evaluated as follows: "⊙ (excellent)" for one having 12 MPa or more; "O (very good)" for one having 9 MPa or more and less than 12 MPa; "Δ (good)" for one having 7 MPa or more and less than 9 MPa; and "X (poor)" for one having less than 7 MPa.

Furthermore, the above-mentioned elongation at break was evaluated as follows: "O (excellent)" for one having 700% or more; "O (very good)" for one having 550% or more and less than 700%; "Δ (good)" for one having 400% or more and less than 550%; and "X (poor)" for one having less than 400%.

### <<Oxygen index>>

Each flame-retardant rubber composition was press-formed (vulcanized) under the condition of 150°C × 20 minutes to produce a rubber sheet having the thickness of 2 mm. Then, the minimum oxygen concentration (volume%) required to sustain burning of this rubber sheet was measured as an oxygen index in accordance with JIS K 7201 to evaluate the burning difficulty of this rubber sheet.

In addition, the above-mentioned oxygen index was evaluated as follows: "O (excellent)" for one having 30 or more; "O (very good)" for one having 26 or more and less than 30; "Δ (good)" for one having 22 or more and less than 26; and "X (poor)" for one having less than 22.

### <<Smoke generation preventing property>>

Each flame-retardant rubber composition was press-formed (vulcanized) under the condition of 150°C × 60 minutes to produce a rubber block having the square size of 76.2 mm and the thickness of 25.4 mm. Then, the light transmittance of smoke generated when burning this rubber block was measured in accordance with ASTM E662 to evaluate the flame-retardancy of this rubber block.

In detail, a Ds value (specific optical density) of smoke 4 minutes after the start of heating in a non-Fleming or Fleming test was measured, and the value thereof was evaluated as follows: "⊙ (excellent)" for one having less than 50; "O (very good)" for one having 50 or more and less than 100; "Δ (good)" for one having 100 or more and less than 200; and "X (poor)" for one having 200 or more.

**[Table 1]**

| (Parts by weight) | | | | | | | | | | | |
|---|---|---|---|---|---|---|---|---|---|---|---|
| | Example | | | | | | | | | | |
| | 1 | 2 | 3 | 4 | 5 | 6 | 7 | 8 | 9 | 10 | 11 |
| EDPM | 95 | 95 | 95 | 95 | - | - | 95 | 95 | 95 | 95 | 95 |
| CSM | - | - | - | - | 95 | - | - | - | - | - | - |
| NR | - | - | - | - | - | 95 | - | - | - | - | - |
| Acid-modified polyolefin | 5 | 5 | 5 | 5 | 5 | 5 | 5 | 5 | 5 | 5 | 5 |
| Zinc oxide | 5 | 5 | 5 | 5 | 5 | 5 | 5 | 5 | 5 | 5 | 5 |
| Stearic acid | 2 | 2 | 2 | 2 | 2 | 2 | 2 | 2 | 2 | 2 | 2 |
| Aluminum hydroxide | 100 | 100 | 100 | 100 | 100 | 100 | 100 | 100 | 100 | 100 | 100 |
| Magnesium hydroxide | - | - | - | - | - | - | - | - | - | - | - |
| Phosphinic acid metal salt-1 | 20 | - | - | - | - | - | - | - | - | - | - |
| Phosphinic acid metal salt-2 | - | 20 | - | 20 | 20 | 20 | 5 | 50 | 20 | 20 | 20 |
| Phosphinic acid metal salt-3 | - | - | 20 | - | - | - | - | - | - | - | - |
| Ammonium polyphosphate | - | - | - | - | - | - | - | - | - | - | - |
| Phenol-based antioxidant | - | - | - | 1.5 | - | - | - | - | - | - | - |
| Peroxide cross-linking agent | 4 | 4 | 4 | 4 | 4 | 4 | 4 | 4 | 4 | 4 | 4 |
| Co-cross-linking agent | 5 | 5 | 5 | 5 | 5 | 5 | 5 | 5 | 5 | 5 | 5 |
| Sulfur | - | - | - | - | - | - | - | - | - | - | - |
| Vulcanization accelerator-1 | - | - | - | - | - | - | - | - | - | - | - |
| Vulcanization accelerator-2 | - | - | - | - | - | - | - | - | - | - | - |
| Vulcanization accelerator-3 | - | - | - | - | - | - | - | - | - | - | - |
| Vulcanization accelerator-4 | - | - | - | - | - | - | - | - | - | - | - |
| Tensile stress (M₁₀₀) | ○ | ○ | ○ | ○ | ○ | ○ | ○ | ⊙ | Δ | ○ | ⊙ |
| Tensile strength | Δ | ○ | ○ | ○ | ○ | ⊙ | ⊙ | Δ | ⊙ | Δ | Δ |
| Elongation at break | ○ | ○ | ○ | ○ | ○ | ○ | ○ | Δ | ⊙ | ○ | Δ |
| Oxygen index | Δ | ○ | ○ | ⊙ | ⊙ | Δ | Δ | ⊙ | Δ | ⊙ | ⊙ |
| Smoke generation preventing property | ○ | ○ | ○ | ○ | ○ | ○ | ○ | ⊙ | Δ | ⊙ | ⊙ |

**[Table 2]**

| (Parts by weight) | | | | | | | | | |
|---|---|---|---|---|---|---|---|---|---|
| | Example | | | | | | Comparative Example | | |
| | 12 | 13 | 14 | 15 | 16 | 17 | 1 | 2 | 3 |
| EDPM | 95 | 95 | 95 | 90 | 70 | 95 | 95 | 100 | 95 |
| CSM | - | - | - | - | - | - | - | - | - |
| NR | - | - | - | - | - | - | - | - | - |
| Acid-modified polyolefin | 5 | 5 | 5 | 10 | 30 | 5 | 5 | - | 5 |
| Zinc oxide | 5 | 5 | 5 | 5 | 5 | 5 | 5 | 5 | 5 |
| Stearic acid | 2 | 2 | 2 | 2 | 2 | 2 | 2 | 2 | 2 |
| Aluminum hydroxide | - | 100 | 100 | 100 | 100 | 100 | 100 | 100 | 100 |
| Magnesium hydroxide | 100 | - | - | - | - | - | - | - | - |
| Phosphinic acid metal salt-1 | - | - | - | - | - | - | - | - | - |
| Phosphinic acid metal salt-2 | 20 | 20 | 20 | 20 | 20 | 20 | - | 20 | - |
| Phosphinic acid metal salt-3 | - | - | - | - | - | - | - | - | - |
| Ammonium polyphosphate | - | - | - | - | - | - | - | - | 20 |
| Phenol-based antioxidant | - | 0.5 | 5 | - | - | - | - | - | - |
| Peroxide cross-linking agent | 4 | 4 | 4 | 4 | 4 | - | 4 | 4 | 4 |
| Co-cross-linking agent | 5 | 5 | 5 | 5 | 5 | - | 5 | 5 | 5 |
| Sulfur | - | - | - | - | - | 0.5 | - | - | - |
| Vulcanization accelerator-1 | - | - | - | - | - | 0.5 | - | - | - |
| Vulcanization accelerator-2 | - | - | - | - | - | 0.5 | - | - | - |
| Vulcanization accelerator-3 | - | - | - | - | - | 1.5 | - | - | - |
| Vulcanization accelerator-4 | - | -. | - | - | - | 1.5 | - | - | - |
| Tensile stress (M₁₀₀) | ○ | ○ | ○ | ○ | ⊙ | ⊙ | ○ | X | ○ |
| Tensile strength | ○ | ○ | Δ | ○ | Δ | ⊙ | ⊙ | Δ | ○ |
| Elongation at break | ○ | ○ | ○ | ○ | Δ | ⊙ | ○ | ○ | ○ |
| Oxygen index | ○ | ○ | ○ | ○ | ○ | ○ | X | ○ | X |
| Smoke generation preventing property | ○ | ○ | ○ | ○ | ○ | ○ | Δ | ○ | Δ |

Based on the results of Table 1 and Table 2 above, it was found that the rubber compositions of the examples had excellent rubber properties such as tensile stress, tensile strength, and elongation at break, and were highly evaluated in flame retardancy evaluation (light-transmitting property test, oxygen index).

On the other hand, in the rubber composition of Comparative Example 1, the phosphinic acid metal salt (component D) was not blended, and the result in which the oxygen index evaluation was inferior to that of the examples was obtained. In the rubber composition of Comparative Example 2, the acid-modified polyolefin (component B) was not blended, and the result in which the tensile stress was inferior to that of the examples was obtained. In the rubber composition of Comparative Example 3, ammonium polyphosphate was blended instead of the phosphinic acid metal salt (component D), but the result in which the oxygen index evaluation and the like were inferior to those of the examples was obtained.

Although the specific embodiments of the present invention have been shown in the above-mentioned examples, the above-mentioned examples are merely examples and are not to be construed in a limited manner. Various modifications apparent to a person skilled in the art are intended to be within the scope of the present invention.

### [Industrial Applicability]

The flame-retardant rubber composition of the present invention exerts an excellent effect on rubber properties such as tensile strength, elongation at break, and tensile stress, and also exerts an excellent flame-retardancy effect. Therefore, this enables excellent performance as a forming material for diaphragms such as an outer diaphragm for rail vehicles to be exhibited in particular. It can be used as, for example, a forming material of diaphragms for automobiles and the like, in addition to the outer diaphragm for rail vehicles.

## Claims

1. A flame-retardant rubber composition comprising the following components (A) to (E):
(A) excluding (B) below, at least one selected from the group consisting of a diene-based rubber, an olefin-based rubber, a urethane rubber, and a silicone rubber;
(B) an acid-modified polyolefin;
(C) a metal hydroxide;
(D) a phosphinic acid metal salt; and
(E) a cross-linking agent of the component (A).

2. The flame-retardant rubber composition according to claim 1, further comprising the following component (F):
(F) a phenol-based antioxidant.

3. The flame-retardant rubber composition according to claim 1 or 2, wherein a content ratio of the component (C) is in a range of 50 to 300 parts by weight with respect to 100 parts by weight as a total content of the component (A) and the component (B).

4. The flame-retardant rubber composition according to any one of claims 1 to 3, wherein a content ratio of the component (D) is in a range of 5 to 50 parts by weight with respect to 100 parts by weight as a total content of the component (A) and the component (B).

5. The flame-retardant rubber composition according to any one of claims 2 to 4, wherein a content ratio of the component (F) is in a range of 0.5 to 5 parts by weight with respect to 100 parts by weight as a total content of the component (A) and the component (B).

6. The flame-retardant rubber composition according to any one of claims 1 to 5, wherein an average particle size of the phosphinic acid metal salt (D) is in a range of 1 to 40 µm.

7. The flame-retardant rubber composition according to any one of claims 1 to 6, wherein the component (A) is at least one selected from the group consisting of a natural rubber, a butadiene rubber, a styrene butadiene rubber, an ethylene-propylene-diene rubber, an ethylene-butene-diene rubber, chlorosulfonated polyethylene, a urethane rubber, and a silicone rubber.

8. The flame-retardant rubber composition according to any one of claims 1 to 7, wherein a content ratio of the component (A) and the component (B) is in a range of A/B = 95/5 to 70/30 in terms of weight ratio.

9. The flame-retardant rubber composition according to any one of claims 1 to 8, wherein the acid-modified polyolefin (B) is a maleic acid anhydride-modified polyolefin.

10. The flame-retardant rubber composition according to any one of claims 1 to 9, wherein the metal hydroxide (C) is at least one selected from aluminum hydroxide and magnesium hydroxide.

11. The flame-retardant rubber composition according to any one of claims 1 to 10, which is a flame-retardant rubber composition for diaphragms.

12. An outer diaphragm for rail vehicles, the outer diaphragm comprising a cross-linked body of the flame-retardant rubber composition according to any one of claims 1 to 10.
